# EUROPEAN PATENT SPECIFICATION

(11) **EP 2 953 219 B1**
(45) Date of publication and mention of the grant of the patent: **26.05.2021**
(21) Application number: 14864994.0
(22) Date of filing: 29.04.2014
(51) Int. Cl.: H02B 13/02, H02B 13/035

(54) **GAS-INSULATED SWITCHGEAR**
GASISOLIERTE SCHALTANLAGE
APPAREILLAGE DE COMMUTATION À ISOLATION GAZEUSE

(43) Date of publication of application: 09.12.2015
(73) Proprietor: Mitsubishi Electric Corporation, Tokyo 100-8310 (JP)
(72) Inventor: KURODA, Takashi, Tokyo 1008310 (JP); YAMAJI, Yuichi, Tokyo 1008310 (JP); YOSHIDA, Tadahiro, Tokyo 1008310 (JP)
(74) Representative: Sajda, Wolf E.
(86) International application number: PCT/JP2014/061921
(87) International publication number: WO 2015/166545

(56) References cited:
- EP-A1- 1 107 408
- EP-A1- 1 160 945
- JP-A- H08 340 610
- JP-A- H08 340 610
- JP-U- H0 574 109
- JP-U- H0 574 109
- US-A1- 2005 219 804

## Description

### Technical Field

The present invention relates to a gas-insulated switchgear that is used in power transmission/distribution facilities, power receiving equipment, and the like.

### Background Art

A gas-insulated switchgear is a main device forming power receiving/transforming facilities, and requires not only reliability, safety, and the labor saving of maintenance but also a reduction in size and cost. Further, the gas-insulated switchgear is subject to various restrictions due to the disposition of other devices of the power receiving/transforming facilities.

For example, the restrictions include whether a lead-in position where the external cable is led into the gas-insulated switchgear is present at an upper or lower portion of the gas-insulated switchgear.

Even though the lead-in position of the external cable is present at any one of the upper and lower portions in a gas-insulated switchgear in the related art, it is possible to cope with the structure of the gas-insulated switchgear by using the same components. Accordingly, the cost of the gas-insulated switchgear is reduced (for example, see PTL 1).

That is, a circuit breaker body is installed in the rear of a control panel that is installed on a floor with a base interposed therebetween, the height of the central axis of the circuit breaker is set to be greater than the sum of a distance between the central axis of the circuit breaker and the upper surface of a bus container and the height of the base, and an operating unit is disposed at the center of the entire gas-insulated switchgear.

When the height of the central axis of the circuit breaker is set as described above, it is possible to cope with the structure of the gas-insulated switchgear by using the same components regardless of the lead-in position of the external cable. Accordingly, standardization is possible and an effect of easily producing the gas-insulated switchgear and reducing cost is obtained.

PTL 2 to 5 each relate to gas-insulated switchgears of the prior art generally according to the preamble of claim 1.

### List of Citations

### Patent Literature

PTL 1: JP-UM-A-5-74109 (page 1 and FIG. 1)
PTL 2: US2005/219804 A1
PTL 3: JP H08 340610 A
PTL 4: EP 1 160 945 A1
PTL 5: EP 1 107 408 A1

### Summary of the Invention

### Technical Problem

In the above-mentioned gas-insulated switchgear, it is possible to reduce cost by forming a sufficient space below the circuit breaker and disposing the operating unit at the center of the entire gas-insulated switchgear so that a problem is not generated even though the above-mentioned gas-insulated switchgear is inverted vertically about the circuit breaker as a center. However, since an excessive space is required, there is a problem in that the size of the device is increased.

An object of the invention is to provide a gas-insulated switchgear which can cope with the lead-in direction of an external cable of a gas-insulated switchgear and of which the height can be reduced in comparison with that in the related art.

### Solution to the Problem

A gas-insulated switchgear according to the invention is given in claim 1.

### Advantageous Effects of the Invention

According to the gas-insulated switchgear of the invention, the pressure tank, the circuit breaker operating mechanism, and the disconnector operating mechanism form an integrated structure in advance and the integrated structure is rotated, supported, and received in the housing in accordance with the lead-in direction of the external cable.

Accordingly, the same tank structure can be used regardless of a difference in the lead-in direction of the external cable, and the height of the gas-insulated switchgear can be reduced in comparison with that in the related art.

Other objects, characteristics, standpoints, and effects of the invention are further apparent from the following detailed description of the invention referring to drawings.

### Brief Description of the Drawings

- FIG. 1: is a side cross-sectional view schematically showing the internal layout of a gas-insulated switchgear according to the embodiment of the invention when the gas-insulated switchgear is used so that an external cable is led out of a lower portion of the gas-insulated switchgear.
- FIG. 2: is a side cross-sectional view showing the specific product structure of the gas-insulated switchgear of FIG. 1.
- FIG. 3: is a side cross-sectional view schematically showing the internal layout of the gas-insulated switchgear according to the embodiment of the invention when the gas-insulated switchgear is used so that an external cable is led out of an upper portion of the gas-insulated switchgear.
- FIG. 4: is a side cross-sectional view showing the specific product structure of the gas-insulated switchgear of FIG. 3.
- FIG. 5: is a side cross-sectional view schematically showing the internal layout of a gas-insulated switchgear according an example not covered by the claims.

### Description of Embodiments

### Embodiment

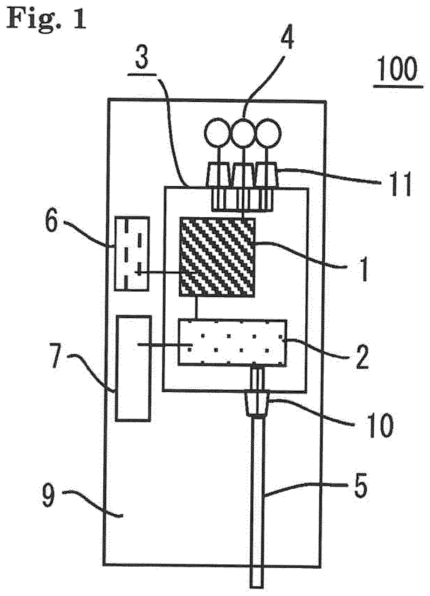

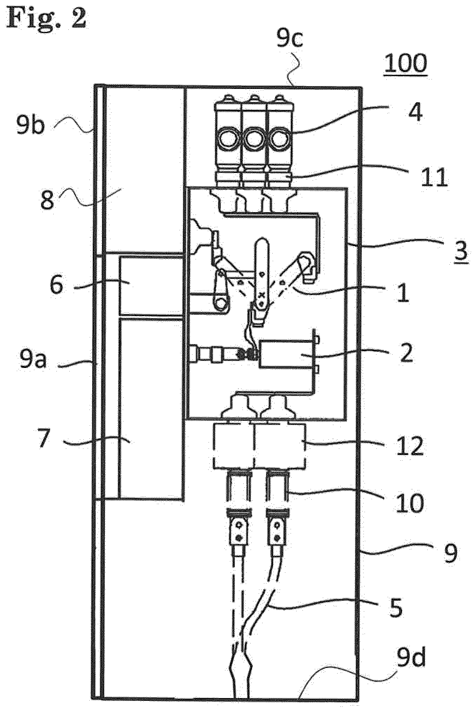

A gas-insulated switchgear according to the embodiment of the invention will be described below with reference to FIGS. 1 to 4. Meanwhile, FIG. 1 is a side cross-sectional view schematically showing the internal layout of the gas-insulated switchgear according to the embodiment of the invention. FIG. 2 is a side cross-sectional view showing the specific product structure of the gas-insulated switchgear of FIG. 1.

FIGS. 1 and 2 show the structure of the gas-insulated switchgear when the gas-insulated switchgear is used so that an external cable connected to a circuit breaker is led out of a lower portion of the gas-insulated switchgear.

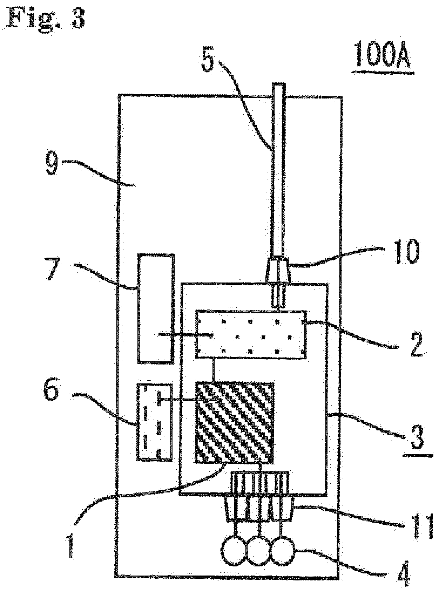

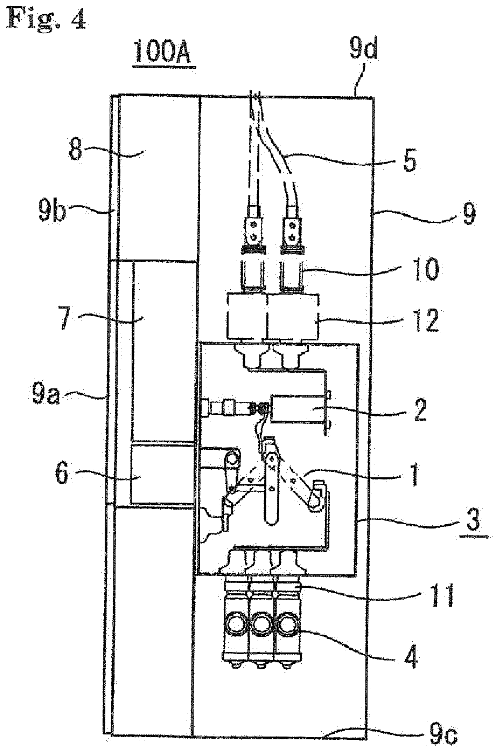

FIG. 3 is a side cross-sectional view schematically showing the internal layout of the gas-insulated switchgear according to the embodiment of the invention. FIG. 4 is a side cross-sectional view showing the specific product structure of the gas-insulated switchgear of FIG. 3.

FIGS. 3 and 4 show the structure of the gas-insulated switchgear when the gas-insulated switchgear is used so that an external cable is led out of an upper portion of the gas-insulated switchgear.

Meanwhile, the same reference numerals denote the same or corresponding portions in the respective drawings.

As shown in FIGS. 1 and 2, a gas-insulated switchgear 100 includes a pressure tank 3, buses 4, an external cable 5, a disconnector operating mechanism 6, a circuit breaker operating mechanism 7, and a control box 8 that are received in a housing 9.

A disconnector 1 and a circuit breaker 2 are received in the pressure tank 3. The disconnector operating mechanism 6 operates the disconnector 1. The circuit breaker operating mechanism 7 operates the circuit breaker 2.

A control circuit is received in the control box 8. Here, the disconnector 1 means a three position disconnector in which the function of a disconnector and the function of a grounding switch are integrated with each other.

Further, the pressure tank 3 is made of metal, and an insulating gas is sealed in the pressure tank 3. Furthermore, the housing 9 includes a frame and panels so as to surround the periphery of the components.

Moreover, a cable-side bushing 10 as an external cable-connecting portion is installed at a portion of the pressure tank 3 that is connected to the external cable 5, and bus-side bushings 11 as bus-connecting portions are installed at a portion of the pressure tank 3 that is connected to the buses 4.

Further, a door 9a is provided on a portion of the housing 9 that is positioned in front of the disconnector operating mechanism 6 and the circuit breaker operating mechanism 7, and a door 9b is provided on a portion of the housing that is positioned in front of the control box 8. Meanwhile, the installation position of the control box 8 is not changed even though the lead-in direction of the external cable 5 is changed.

Further, a CT (current transformer) 12, which is a sensor concentrically mounted and measuring a main circuit current, is installed on the outer periphery of the cable-side bushing 10. Meanwhile, the external cable 5, the cable-side bushing 10, the circuit breaker 2, the disconnector 1, the bus-side bushings 11, and the buses 4 are formed in this order as a current flow path.

The pressure tank 3, the disconnector operating mechanism 6, and the circuit breaker operating mechanism 7, which have been described above, are integrated in advance to form an integrated structure. Moreover, the integrated structure is rotated, supported, and received in the housing 9 in accordance with the lead-in direction of the external cable 5, so that the external cable 5 can be adapted so as to be received and fixed in any aspect of the aspects of FIGS. 2 and 4.

FIGS. 1 and 2 show a structure in which the external cable 5 is led in from the lower portion of the gas-insulated switchgear 100, and a gas-insulated switchgear 100A of FIGS. 3 and 4 has a structure in which the external cable 5 is led in from the upper portion of the gas-insulated switchgear.

Accordingly, the integrated structure, which includes the pressure tank 3, the disconnector operating mechanism 6, and the circuit breaker operating mechanism 7, is inverted vertically and supported.

When the shapes or structures of a top plate 9c and a bottom plate 9d of the housing 9 can be arbitrarily changed in accordance with the lead-in direction of the external cable 5, the housing 9 can easily cope with the inversion of the integrated structure.

For example, a known technique, such as forming an opening into which the external cable 5 is inserted at each of the top plate 9c and the bottom plate 9d and mounting a lid on the opening into which the external cable 5 is not inserted, can be appropriately applied.

Meanwhile, it is not preferable that a dial (not shown), which appears during the opening of the door 9a, is installed in front of the disconnector operating mechanism 6 and the circuit breaker operating mechanism 7, and displays an operating direction and the like, be inverted vertically together when the pressure tank 3, the disconnector operating mechanism 6, and the circuit breaker operating mechanism 7 integrated in advance are inverted vertically.

For this reason, it is possible to easily cope with the inversion of the integrated structure by forming a dial with, for example, a seal in which an adhesive is applied to the back and attaching to the integrated structure after the determination of the vertical direction of the integrated structure.

Further, when, for example, a counter or the like provided on the disconnector operating mechanism 6 or the circuit breaker operating mechanism 7 is inverted vertically due to the inversion of the pressure tank 3 and the like, it is possible to cope with the inversion of the integrated structure by detaching the counter or the like once and reattaching the counter or the like in a posture in which the counter or the like corresponds to the disconnector operating mechanism 6 or the circuit breaker operating mechanism 7 in a vertical direction.

Next, an example of the connection between the pressure tank 3 and the external cable 5 and the buses 4 will be described.

The cable-side bushing 10 for three phases, which is the external cable-connecting portion, is airtightly provided on a through hole (not shown) that is formed at the floor of the pressure tank 3. The external cable 5 is electrically connected to a conductor, which is provided in the pressure tank 3, through a conductor passing through the cable-side bushing 10, so that an electric path is formed.

The bus-side bushings 11 for three phases, which are the bus-connecting portions, are airtightly provided on through holes (not shown) that are formed at the upper surface portion of the pressure tank 3. The buses 4 are electrically connected to conductors, which are provided in the pressure tank 3, through conductors passing through the bus-side bushings 11, so that a current flow path is formed.

The bus 4 is, for example, a solid-insulation bus, and it is preferable that the bus 4 be provided with a ground screen. When a solid-insulation bus is used, gas treatment is not necessary. Since the buses 4 are inserted into the bus-side bushings 11 and can be mounted by screwing, work can be performed even in a relatively small space.

Next, general combinations, when the cable-side bushing 10 and the external cable 5 corresponding to the cable-side bushing 10 are connected to each other, will be described.
A: Gas terminal cable and bushing including a gas-insulation portion.
B: Linear slip-on connection bushing (male) and linear slip-on cable (female).
C: Linear slip-on connection bushing (female) and linear slip-on cable (male).

Gas treatment is not necessary in all the combinations A, B, and C. Further, in regard to the respective characteristics, the terminal treatment of A is easiest but a terminal distance of A is long, and a bit of time is required for the terminal treatment of B and C but a terminal distance of B and C is short.

A gas-insulated switchgear can be selected according to specifications of the delivery destination of the gas-insulated switchgear on the basis of these characteristics.

Meanwhile, the gas-insulated switchgear 100A shown in FIG. 3 has a structure in which the external cable 5 is led in from the upper portion of the housing 9. In the gas-insulated switchgear 100A, the pressure tank 3 described in the gas-insulated switchgear 100 of FIG. 1 and the disconnector operating mechanism 6 and the circuit breaker operating mechanism 7 installed outside the pressure tank 3 are integrally inverted vertically and the shape of the housing 9 is changed so that the external cable 5 is led in from the upper portion.

For this purpose, structures, such as mounting portions or fixing portions for devices received in the housing 9, are formed in advance so as to correspond to the structures of both the housing 9 and the devices received in the housing 9 so that the pressure tank 3, the disconnector operating mechanism 6, and the circuit breaker operating mechanism 7 are mounted at a height where the minimum space required for the installation of the buses 4 can be ensured from the floor of the gas-insulated switchgear 100A.

As described above, according to the embodiment, the pressure tank 3 receiving the three position disconnector 1 and the circuit breaker 2, the disconnector operating mechanism 6, and the circuit breaker operating mechanism 7 are adapted so as to be capable of being integrally inverted vertically in accordance with the lead-in direction of the external cable 5, and the top plate 9c and the bottom plate 9d of the housing 9 are changed so as to be capable of being exchanged.

Accordingly, it is possible to mount the pressure tank 3, the disconnector operating mechanism 6, and the circuit breaker operating mechanism 7 only by ensuring a terminal distance required for the connection between the external cable 5 and the cable-side bushing 10, when the external cable is led in from the lower portion, and ensuring a dimension required for the connection between the bus 4 and the bus-side bushing 11 from the floor of the switchgear when the external cable is led in from the upper portion. As a result, it is possible to obtain a gas-insulated switchgear of which the height is smaller than that in the related art.
Since the gas-insulated switchgears 100 and 100A can use the same pressure tank 3 and the same operating mechanism regardless of the lead-in direction of the external cable 5, an effect of stabilizing quality by the complete unitization of assembly and an effect of reducing cost by mass production in comparison with the related art are obtained.

### Example not covered by the Claims

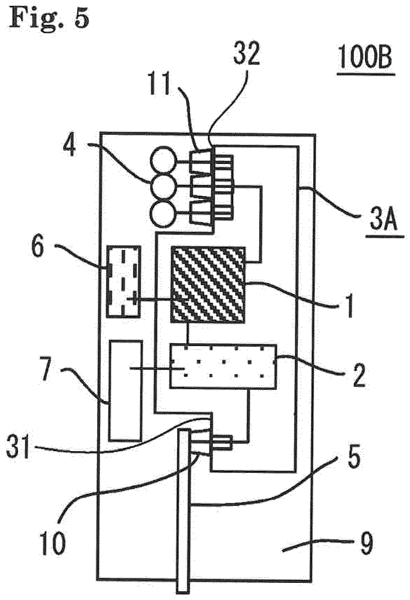

FIG. 5 is a side cross-sectional view schematically showing the internal layout of a gas-insulated switchgear according to an example not covered by the claims. Meanwhile, the gas-insulated switchgear 100B of this example uses a pressure tank 3A of which the shape is changed so that a cable-side bushing 10 and bus-side bushings 11 are mounted on the surface perpendicular to the floor.

In FIG. 5, the pressure tank 3A is formed in a protruding shape, in which stepped portions 31 and 32 are formed at upper and lower portions of a surface on which the disconnector operating mechanism 6 and the circuit breaker operating mechanism 7 provided on the front surface side (the left side in FIG. 5) are mounted, in side view.

The cable-side bushing 10 is mounted on the stepped portion 31 that forms one vertical surface formed in a stepped shape, and the bus-side bushings 11 are mounted on the stepped portion 32 that forms the other vertical surface.

Since the cable-side bushing 10 is mounted on one stepped portion 31 and the bus-side bushings 11 are mounted on the other stepped portion 32 as described above, the height of the housing 9 on which the buses 4 for three phases are arranged in the vertical direction is greater than that of the housing of the gas-insulated switchgear 100 described in the embodiment.

However, since the cable-side bushing 10 and the bus-side bushings 11 are horizontally installed together, a total height is rather reduced and the buses 4 and the external cable 5 can be mounted from the front surface side of the housing 9. Since other structures are the same as those of the embodiment shown in FIGS. 1 to 4, the description thereof will be omitted.

In the example formed as described above, as in the embodiment, in order to change the structure of the gas-insulated switchgear 100B into a structure in which the external cable 5 is led in from the upper portion of the gas-insulated switchgear 100B, the pressure tank 3A, the disconnector operating mechanism 6, and the circuit breaker operating mechanism 7 only have to be integrally inverted vertically and received and fixed to the housing 9.

As a result, the pressure tank 3A, the disconnector operating mechanism 6, and the circuit breaker operating mechanism 7 are mounted at a height where the minimum space required for the installation of the buses 4 can be ensured.

When the gas-insulated switchgear 100B described in the example is used, an effect described in the embodiment is obtained and installation work can be performed only in a space present on the front surface side of the housing 9 at the delivery destination of the gas-insulated switchgear 100B. Accordingly, an installation space can be reduced in comparison with the related art.

## Claims

1. A gas-insulated switchgear (100) comprising:
- a pressure tank (3) in which a circuit breaker (2) and a disconnector (1) are received and an insulating gas is sealed;
- a circuit breaker operating mechanism (7) that is installed outside the pressure tank (3) and operates the circuit breaker (2);
- a disconnector operating mechanism (6) that is installed outside the pressure tank (3) and operates the disconnector (1); and
- a housing (9) in which the pressure tank (3), the circuit breaker operating mechanism (7), and the disconnector operating mechanism (6) are received,
- wherein the pressure tank (3), the circuit breaker operating mechanism (7), and the disconnector operating mechanism (6) are an integrated structure and are received in the housing (9),
- **characterised in that**: the housing (9) and said integrated structure are so formed to allow mounting of said integrated structure in a first orientation such that a cable-side bushing (10) and bus-side bushings (11) installed on opposing sides of the pressure tank (3) align with buses (4) and an external cable (5), respectively,
- when the external cable (5) is led in from the lower portion of the housing (9), and in a second orientation, vertically inverted with respect to the first orientation, when the external cable (5) is led in from the upper portion of the housing (9), and
- wherein the housing (9) is so sized to ensure that a space below said integrated structure is just large enough to allow connection of the external cable (5) in the first orientation and the minimum space from the floor of the gas-insulated switchgear for installation of buses (4) in the second orientation, thus minimising the height of the housing (9).

## Patentansprüche

1. Gasisolierte Schaltanlage (100), die Folgendes aufweist:
- einen Druckbehälter (3), in dem ein Leistungsschalter (2) und ein Trennschalter (1) untergebracht sind ist und ein Isoliergas eingeschlossen ist;
- einen Leistungsschalter-Betätigungsmechanismus (7), der außerhalb des Druckbehälters (3) angeordnet ist und den Leistungsschalter (2) betätigt;
- einen Trennschalter-Betätigungsmechanismus (6), der außerhalb des Drucktanks (3) angeordnet ist und den Trennschalter (1) betätigt; und
- ein Gehäuse (9), in dem der Druckbehälter (3), der Leistungsschalter-Betätigungsmechanismus (7) und der Trennschalter-Betätigungsmechanismus (6) untergebracht sind,
- wobei der Drucktank (3), der Leistungsschalter-Betätigungsmechanismus (7) und der Trennschalter-Betätigungsmechanismus (6) eine integrierte Struktur bilden und in dem Gehäuse (9) untergebracht sind,
**dadurch gekennzeichnet,**
**dass** das Gehäuse (9) und die integrierte Struktur so ausgebildet sind, dass sie eine Montage der integrierten Struktur in einer ersten Orientierung ermöglichen, derart, dass eine kabelseitige Buchse (10) und busseitige Buchsen (11), die auf gegenüberliegenden Seiten des Druckbehälters (3) angeordnet sind, mit Bussen (4) bzw. einem externen Kabel (5) ausgerichtet sind,
- wenn das externe Kabel (5) vom unteren Bereich des Gehäuses (9) aus eingeführt ist, und in einer zweiten Ausrichtung, vertikal entgegengesetzt in Bezug auf die erste Ausrichtung, wenn das externe Kabel (5) vom oberen Bereich des Gehäuses (9) aus eingeführt ist, und
- wobei das Gehäuse (9) so bemessen ist, dass sichergestellt ist, dass ein Raum unterhalb der integrierten Struktur gerade groß genug ist, um das Anschließen des externen Kabels (5) in der ersten Ausrichtung und den minimalen Raum vom Boden der gasisolierten Schaltanlage für die Installation von Bussen (4) in der zweiten Ausrichtung zu ermöglichen, so dass die Höhe des Gehäuses (9) minimiert ist.

## Revendications

1. Appareillage de commutation isolé au gaz (100) comprenant :
- un réservoir sous pression (3) dans lequel un disjoncteur (2) et un sectionneur (1) sont reçus et un gaz isolant est scellé ;
- un mécanisme d'actionnement de disjoncteur (7) qui est installé à l'extérieur du réservoir sous pression (3) et actionne le disjoncteur (2) ;
- un mécanisme d'actionnement de sectionneur (6) qui est installé à l'extérieur du réservoir sous pression (3) et actionne le sectionneur (1) ; et
- un boîtier (9) dans lequel le réservoir sous pression (3), le mécanisme d'actionnement de disjoncteur (7) et le mécanisme d'actionnement de sectionneur (6) sont reçus,
- dans lequel le réservoir sous pression (3), le mécanisme d'actionnement de disjoncteur (7) et le mécanisme d'actionnement de sectionneur (6) sont une structure intégrée et sont reçus dans le boîtier (9),
**caractérisé en ce**
**que** le boîtier (9) et ladite structure intégrée sont formés de manière à permettre le montage de ladite structure intégrée dans une première orientation de telle sorte qu'une douille côté câble (10) et des douilles côté bus (11) installées sur des côtés opposés du réservoir sous pression (3) soient alignées avec des bus (4) et un câble externe (5), respectivement,
- lorsque le câble externe (5) est introduit depuis la partie inférieure du boîtier (9), et dans une deuxième orientation, inversée verticalement par rapport à la première orientation, lorsque le câble externe (5) est introduit depuis la partie supérieure du boîtier (9), et
- dans lequel le boîtier (9) est dimensionné de manière à assurer qu'un espace sous ladite structure intégrée soit juste assez grand pour permettre la connexion du câble externe (5) dans la première orientation et l'espace minimal à partir du plancher de l'appareillage de commutation isolé au gaz pour l'installation de bus (4) dans la deuxième orientation, minimisant ainsi la hauteur du boîtier (9).
